# EUROPÄISCHE PATENTANMELDUNG

(11) **EP 0 806 830 A2**
(43) Veröffentlichungstag der Anmeldung: **12.11.1997**
(21) Anmeldenummer: 97107313.5
(22) Anmeldetag: 02.05.1997
(51) Int. Cl.: H02K 5/04

(54) **Gehäuse für eine elektrische Maschine**

(30) Priorität: 06.05.1996 DE 19618132
(71) Anmelder: SIEMENS AKTIENGESELLSCHAFT, 80333 München (DE)
(72) Erfinder: Büttner, Klaus, Dipl.-Ing. (FH), 97618 Hollstadt (DE)

(57) **Zusammenfassung**

Die Erfindung bezieht sich auf ein Gehäuse für eine elektrische Maschine, das in Umfangsrichtung eine geschlossenen Kontur aufweist und auf ein Blechpaket aufschiebbar ist. Trotz durch das Herstellungsverfahren des Gehäuses bedingter großer Maßtoleranzen kann das Gehäuse (1) ohne Nachbearbeitung auf das Ständerblechpaket einer elektrischen Maschine aufgebracht werden, wenn das Gehäuse mindestens eine in Umfangsrichtung elastische Dehnungsstelle (4 bzw. 4a) aufweist.

## Beschreibung

Die Erfindung bezieht sich auf ein Gehäuse für eine elektrische Maschine, das in Umfangsrichtung eine geschlossene Kontur aufweist und auf ein Blechpaket aufschiebbar ist.

Derartige Gehäuse werden bekannterweise als Strangpreßprofile hergestellt, entsprechend abgelangt und dann auf das Ständerblechpaket einer elektrischen Maschine aufgezogen, wobei zwischen dem Gehäuse und dem Blechpaket ein straffer Sitz erreicht werden muß. Durch die Herstellung im Strangpreßverfahren bedingt, weist die das Blechpaket aufnehmende Standerbohrung gegenüber dem Blechpaket eine zu große Toleranz auf, so daß die Ständerbohrung derartiger Gehäuse über die volle axiale Länge ausgedreht werden muß, damit das Gehäuse auf das Blechpaket aufgezogen werden kann.

Der Erfindung liegt die Aufgabe zugrunde ein Gehäuse für eine elektrische Maschine zu schaffen, das trotz der durch das Herstellungsverfahren bedingten großen Toleranzen ohne Nachbearbeitung mit straffem Sitz auf das Blechpaket aufgebracht werden kann.

Die Lösung der gestellten Aufgabe gelingt nach der Erfindung dadurch, daß das Gehäuse mindestens eine in Umfangsrichtung elastische Dehnungsstelle aufweist. Die elastisch Dehnungsstelle ermöglicht beim Aufziehen des Gehäuses auf das Standerblechpaket einer elektrischen Maschine eine entsprechende Aufweitung des Gehäuses, so daß dieses trotz der mit relativ großen Maßtoleranzen behafteten Standerbohrung ohne jegliche Nachbearbeitung der Ständerbohrung auf das Blechpaket aufgebracht werden kann, wobei der erforderliche straffe Sitz zwischen Gehäuse und Blechpaket gewährleistet ist.

Eine hohe Elastizität der Dehnungsstelle ist dadurch gegeben, daß diese als gewölbte Ausbuchtung ausgebildet ist. Vorteilhafterweise kann die Dehnungsstelle als nach radial außen gewölbte Ausbuchtung ausgebildet sein.

Ein großes Dehnungsmaß läßt sich ohne die Gefahr einer Beschädigung des Gehäuses dadurch erzielen, daß über den Umfang des Gehäuses verteilt mehrere Ausbuchtungen vorgesehen sind.

Werden die nach radial außen gewölbten Ausbuchtungen entsprechend verteilt am Gehäuse vorgesehen, so können sie gleichzeitig zur Aufnahme von die Lagerschilde der Maschine verbindenden Zugankern dienen.

Anhand eines in der Zeichnung dargestellten Ausführungsbeispieles wird die Erfindung nachfolgend noch näher beschrieben. Es zeigen:

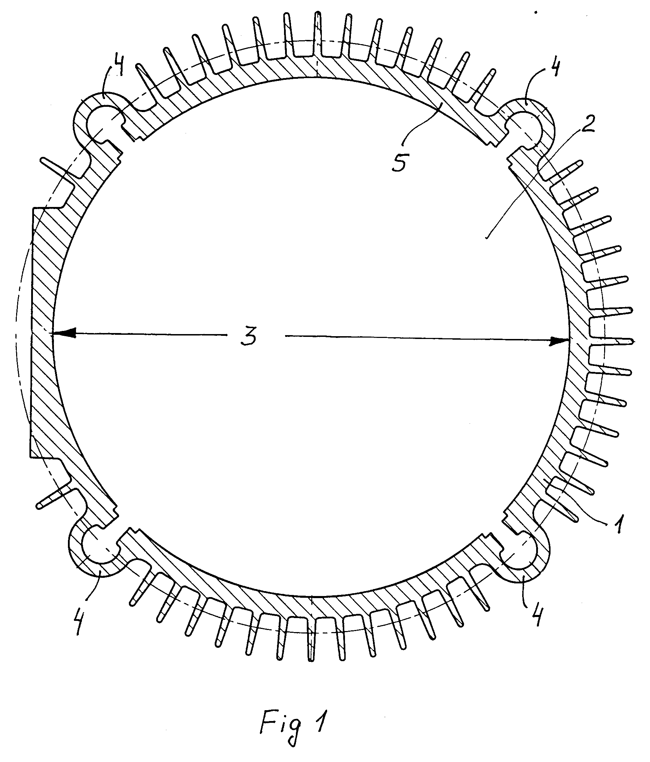

- FIG 1: eine Stirnansicht eines als Strangpreßprofil hergestellten Gehäuses,
- FIG 2: ein Gehäuse mit angebautem Lagerschild im Längsschnitt.
- FIG.3: eine Stirnansicht eines als Strangpreßprofil hergestellten Gehäuses, dessen Innenwand kontinuierlich fortlaufend mit Ausbuchtungen versehen ist.

Mit 1 ist ein als Strangpreßprofil hergestelltes Gehäuse einer elektrischen Maschine bezeichnet, welches zur Aufnahme des Ständerblechpaketes der Maschine eine entsprechende Ständerbohrung 2 aufweist. Der Innendurchmesser 3 der Ständerbohrung 2 ist entsprechend an den Außendurchmesser des Ständerblechpaketes angepaßt, so daß das Gehäuse 1 auf das Ständerblechpaket aufgezogen werden kann. Durch das Herstellen als Strangpreßprofil bedingt ist der Innendurchmesser 3 des Gehäuses 1 mit großen Toleranzen behaftet. Um trotzdem ein Aufziehen des Gehäuses 1 auf das Ständerblechpaket ohne vorheriges Nachbearbeiten der Ständerbohrung 2 zu ermöglichen, sind an dem Gehäuse 1 vier nach radial außen vorgewölbte Ausbuchtungen 4 vorgesehen. Diese Ausbuchtungen 4 werden beim Herstellen des Gehäuses 1 mit angeformt.

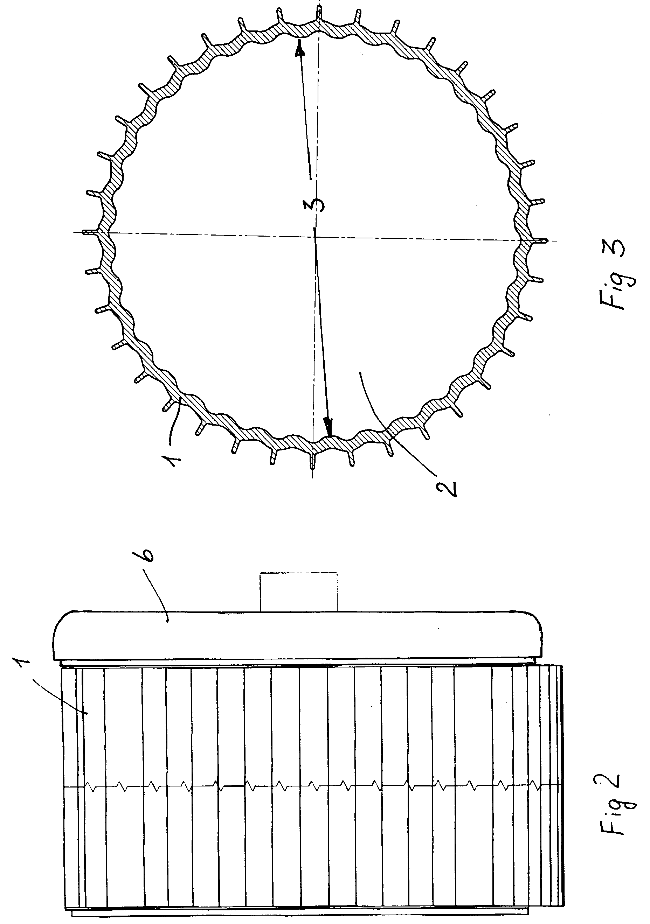

Es besteht auch die Möglichkeit wie dies die Fig. 3 zeigt, über dem gesamten Innenumfang des Gehäuses verteilt Ausbuchtungen 4a vorzusehen, die lediglich in die Gehäusewand 5 eingewölbt sind.

Die Ausbuchtungen 4 und 4a stellen aufgrund ihrer Form und der entsprechenden Verbindung mit der Gehäusewand 5 elastische Dehnungsstellen dar. Beim Aufbringen des Gehäuses 1 auf ein Ständerblechpaket kann die Ständerbohrung 2 ohne Probleme aufgrund der Nachgiebigkeit der Ausbuchtungen 4 bzw. 4a etwas aufgeweitet werden, so daß das Gehäuse 1 ohne Schwierigkeiten auf das Ständerblechpaket aufgeschoben werden kann. Das Gehäuse 1 federt nach dem Aufschieben auf das Ständerblechpaket wieder zurück und liegt dann straff am Außenumfang des Ständerblechpaketes an.

Durch die auf entsprechende Zentrierränder des Gehäuses 1 aufmontierten Lagerschilde 6 der Maschine wird einer Aufweitung des Gehäuses 1 entgegengewirkt. Damit ist trotz der elastischen Dehnungsstellen ein straffer Sitz des Gehäuses 1 auf dem Ständerblechpaket jederzeit gewährleistet.

## Patentansprüche

1. Gehäuse für eine elektrische Maschine, das in Umfangsrichtung eine geschlossene Kontur aufweist und auf ein Blechpaket aufschiebbar ist,
**dadurch gekennzeichnet**,
daß das Gehäuse (1) mindestens eine in Umfangsrichtung elastische Dehnungsstelle (4 bzw. 4a) aufweist.

2. Gehäuse nach Anspruch 1,
**dadurch gekennzeichnet**,
daß die Dehnungsstelle als gewölbte Ausbuchtung (4a) ausgebildet ist.

3. Gehäuse nach Anspruch 1 oder 2, **dadurch gekennzeichnet,** daß die Dehnungsstelle als nach radial außen gewölbte Ausbuchtung (4) ausgebildet ist.

4. Gehäuse nach Anspruch 2 oder 3,
**dadurch gekennzeichnet**,
daß über den Umfang des Gehäuses (1) verteilt mehrere Ausbuchtungen (4 bzw. 4a) vorgesehen sind.

5. Gehäuse nach Anspruch 3 und 4,
**dadurch gekennzeichnet**,
daß die nach radial außen gewölbten Ausbuchtungen (4) zur Aufnahme von die beiden Lagerschilde der Maschine verbindenden Zugankern dienen.
